# FASCICULE DE BREVET EUROPEEN

(11) **EP 0 496 670 B1**
(45) Date de publication et mention de la délivrance du brevet: **18.09.1996**
(21) Numéro de dépôt: 92400160.5
(22) Date de dépôt: 22.01.1992
(51) Int. Cl.: C03C 17/04, C03C 8/14

(54) **Procédé pour l'émaillage d'un substrat en verre et composition d'émail utilisée**
Verfahren zum Emaillieren eines Glassubstrats und Zusammensetzung des verwendeten Emails
Process for enamelling a glass substrate and enamel composition used

(30) Priorité: 25.01.1991 FR 9100871
(43) Date de publication de la demande: 29.07.1992
(73) Titulaire: SAINT-GOBAIN VITRAGE, F-92400 Courbevoie (FR)
(72) Inventeur: Daude, Gérard, F-33140 Villenave d'Ornon (FR); Dievart, Cathy, F-60170 Tracy le Val (FR); Ros-Guezet, Marie, F-60170 Tracy le Mont (FR)
(74) Mandataire: Muller, René

(56) Documents cités:
- EP-A- 0 074 314
- EP-A- 0 174 893
- EP-A- 0 446 114
- DE-A- 2 734 147
- FR-A- 2 458 323
- US-A- 4 606 748
- WORLD PATENTS INDEX Week 7338, Derwent Publications Ltd., London, GB; AN 73-56197U & JP-B-48 029 774 (LIGNITE CO LTD)
- WORLD PATENTS INDEX Week 7907, Derwent Publications Ltd., London, GB; AN 79-12694B & JP-A-54 001 231 (MITSUBISHI HEAVY IND KK) 8 Janvier 1979
- CHEMICAL ABSTRACTS, vol. 81, no. 12, 23 Septembre 1974, Columbus, Ohio, US; abstract no. 67798G, page 288; & SU-A-399517 (UKRAIN. SCIENT. RES. INST. GLASS AND FAIENCE IND.) 3.10.1973

## Description

La présente invention concerne le dépôt d'émail sur un substrat en verre, notamment sur un vitrage. Elle concerne en particulier un nouveau procédé pour la fabrication d'une couche émaillée sur un substrat en verre. Elle concerne aussi une composition d'émail apte à être utilisée pour la fabrication d'une couche sur un substrat en verre.

Par émail, on entend selon l'invention aussi bien la composition ou pâte d'émail, employée pour le dépôt, que la couche d'émail formée à différents stades du procédé de fabrication comme décrit par la suite.

Les émaux sont bien connus dans l'état de la technique et utilisés notamment sur des substrats en verre tels les vitrages de véhicules ou les vitrages bâtiment ou encore des miroirs. On utilise ainsi des émaux pour former des bordures, des couches décoratives, des couches de protection notamment pour les couches adhésives utilisées pour le montage du vitrage dans la baie de carrosserie lorsqu'il s'agit par exemple de pare-brise ou de lunette arrière, ou pour le montage d'accessoires par exemple des supports de rétroviseurs, ou encore comme couche de protection pour des bandes collectrices de réseaux chauffants etc...

L'émail utilisé pour ces applications est généralement formé d'une poudre comprenant une fritte de verre et des pigments employés en tant que colorants, à base d'oxydes métalliques, et d'un médium encore appelé véhicule comprenant généralement un liant permettant l'adhésion de l'émail avec le verre au moment du dépôt, et d'un solvant ou diluant organique permettant la mise à viscosité désirée pour l'application de la composition sur le substrat.

Cette application peut se faire par différents procédés tels que la pulvérisation, la sérigraphie, le revêtement au rouleau, etc...

On utilise de préférence la sérigraphie qui permet d'obtenir des formes et des structures de couches très variées et reproductibles.

Pour fabriquer la couche émaillée, on procède donc de préférence par un dépôt de l'émail sur le substrat par sérigraphie, on sèche la couche humide formée jusqu'à ce que cette couche ait une adhésion sur le verre et une tenue générale suffisantes pour que le cas échéant le vitrage puisse être manipulé sans qu'apparaissent des traces sur la couche formée, on dépose éventuellement d'autres couches que l'on sèche, et on traite finalement la ou les couches(s) émaillée(s) par un traitement thermique à haute température afin de vitrifier l'émail et d'obtenir le revêtement définitif.

Ce traitement de vitrification à haute température est généralement lié au traitement thermique utilisé pour la transformation de la feuille de verre, par exemple pour le bombage de la feuille de verre.

Le séchage de l'émail correspond soit à l'élimination du solvant ou diluant du médium et à cette fin on utilise généralement un chauffage par infra-rouge (IR), soit à un durcissement par polymérisation par des rayonnements UV, selon la composition d'émail employée. Ces types de séchage présentent des inconvénients.

Ainsi le séchage par IR est dispensieux en énergie. Il nécessite aussi une ligne de séchage étendue. Il pose en outre le problème de l'évaporation des solvants organiques et de la protection de l'environnement.

Le séchage par UV quant à lui ne peut s'appliquer qu'à un émail contenant des composants organiques polymérisant sous l'action des UV et en particulier des composés acryliques. Se pose alors également le problème de la nocivité de ces produits. En outre, récemment, il a été montré que l'utilisation des UV conduisait à une production d'ozone. En plus, la polymérisation par UV ne peut s'appliquer qu'à la fabrication de couches d'émail de très faibles épaisseurs, généralement trop minces pour une bordure émaillée d'un vitrage automobile par exemple, car pas suffisamment opaques.

On connait du document FR-2 458 323 le revêtement d'un substrat en verre par un vernis polymérisable dont on effectue la fusion par micro-ondes.

On connait aussi du document US-A-4 606 748 la fusion par micro-ondes d'une poudre de verre à une température de plus de 1250°C.

L'invention obvie aux inconvénients cités. Elle propose un nouveau procédé pour la fabrication d'au moins une couche d'émail sur au moins une partie d'un substrat en verre en particulier un vitrage, utilisant un séchage, rapide, économique en énergie et réduisant les risques pour l'environnement.

Selon l'invention, au moins une partie du séchage d'une couche d'émail déposée sur le substrat en verre est effectué par énergie micro-ondes, le séchage par micro-ondes étant associé à un séchage choisi parmi les séchages par I.R. et les séchages par soufflage d'air chaud.

Outre les avantages déjà signalés, l'énergie micro-ondes, en étant absorbée préférentiellement par la composition d'émail et peu par le substrat en verre, non seulement est économe en énergie, mais, en outre, du fait de la faible élévation de température du substrat qui en résulte, permet d'éliminer ou tout au moins de réduire l'étape ultérieure de refroidissement du substrat souvent nécessaire lors d'un séchage par I.R.

Par substrat en verre, on entend selon l'invention aussi bien un substrat en verre nu qu'un substrat en verre déjà revêtu d'une ou plusieurs couches d'émail.

L'invention propose aussi un nouveau procédé pour l'émaillage d'un substrat en verre, en particulier un vitrage, dans lequel on dépose sur au moins une partie de la surface du verre une composition d'émail contenant au moins un composant susceptible d'absorber de l'énergie micro-ondes, on sèche la couche formée au moins partiellement par chauffage micro-ondes, et ultérieurement, on effectue la fusion ou vitrification de la couche d'émail.

Pour que le chauffage par micro-ondes ait l'efficacité désirée, il est nécessaire qu'au moins un des composants présent en quantité non négligeable puisse absorber cette énergie micro-ondes et la transformer en effet Joule.

La composition d'émail utilisable selon l'invention comprend donc sous un de ses aspects un médium contenant de l'eau et de préférence un médium aqueux. L'eau du fait de la perte diélectrique élevée de ses molécules absorbe particulièrement bien l'énergie micro-ondes et devient par conséquent lorsqu'il s'agit d'un médium aqueux un diluant mieux adapté au procédé selon l'invention qu'un solvant organique.

Afin d'augmenter encore la vitesse de séchage, sous un des aspects de l'invention, la composition d'émail peut comprendre un composant, autre que l'eau, susceptible d'absorber de l'énergie micro-ondes, que l'on désignera par la suite dopant micro-ondes.

Finalement, un des objets de l'invention est une composition d'émail comprenant une poudre formée d'une fritte et de pigments à raison d'environ 60 à 90 % en poids par rapport au poids total de la composition d'émail, d'un médium aqueux formé d'un liant permettant la liaison avec le verre et d'un diluant ou solvant pour la mise à viscosité désirée dont au moins une partie est de l'eau, et éventuellement d'au moins un dopant micro-ondes à raison d'au moins 1 % en poids, de préférence d'au moins 3 % en poids.

Par composition d'émail on entend également selon l'invention une composition contenant une pâte d'argent, c'est-à-dire une composition dans lequel les pigments sont généralement remplacés par de l'argent et/ou éventuellement d'autres métaux.

En tant que dopant micro-ondes, on peut utiliser tout produit ayant une perte diélectrique élevée et n'ayant pas d'action négative ou néfaste sur les autres composants de l'émail, ou encore par rapport aux autres étapes du procédé d'émaillage.

Avantageusement, on peut choisir le dopant parmi les produits suivants : PbS, Fe₃O₄, CuO, NiO, MnO₂, Cr₂O₃, le noir de carbone, des ferrites, le sulfure de cuivre, le carbure de silicium, un mélange de ces produits.

Le médium aqueux est une solution ou une dispersion dans l'eau d'au moins un liant choisi notamment parmi les polyéthylèneglycols, le styrène-butadiène, des ligno-sulfonates, des résines alkydes, ou encore parmi d'autres liants tels ceux connus et utilisés dans l'industrie de la peinture. De préférence, on utilise des polyéthylèneglycols et, avantageusement, en mélange avec du styrène-butadiène.

Lorsqu'on utilise un mélange de polyéthylèneglycols avec du styrène-butadiène, on améliore l'adhésion de la composition avec le verre par rapport à l'emploi des seuls polyéthylèneglycols. Les proportions entre les deux composants peuvent varier largement et peuvent dépendre de la quantité d'eau contenue dans le médium.

Cependant, on préfère utiliser un mélange avec moins de 40 % en poids de styrène-butadiène pour plus de 60 % de polyéthylèneglycols lorsque l'on veut que la composition émaillée ait une durée de vie après sa préparation suffisamment longue pour être compatible avec les contraintes industrielles, et sans ajout important d'eau.

L'eau est présente dans le médium à raison généralement d'au moins 10 % en poids. Elle provient des préparations des mélanges organiques utilisés et/ou d'eau, ajoutées éventuellement pour la mise à la viscosité désirée de la composition.

La composition émaillée utilisable selon l'invention, doit en outre se prêter à la technique de dépôt envisagée. Etant donné qu'on utilise de préférence la sérigraphie, la composition doit alors présenter une viscosité adaptée, par exemple de 5 à 80 Pas, et ne contenir que des composants de granulométrie inférieure à la taille des mailles, par exemple inférieure à 20 µm. En outre, elle ne doit pas sécher trop vite et en particulier déjà sur l'écran de sérigraphie.

Ainsi, sous un des aspects de l'invention, on ajoute des additifs dans la composition d'émail en vue d'éviter le séchage trop rapide de la composition sur la toile de sérigraphie. Ces additifs sont par exemple des microsilices à surface hydrophobe qui présentent en outre l'avantage d'adapter la rhéologie de la pâte émaillée pour l'application sur le substrat en lui procurant la fluidité désirée.

Les poudres connues pour la fabrication de couches émaillées sur le verre conviennent généralement bien au procédé selon l'invention utilisant un séchage micro-ondes. Un des avantages de l'invention est précisément la possibilité d'utiliser des formulations bien connues pour la poudre et dont on sait qu'elles fourniront finalement une couche émaillée ayant les propriétés désirées aussi bien du point de vue mécanique, que du point de vue optique, en particulier l'aspect.

La composition d'émail peut encore contenir d'autres additifs ou agents, notamment des agents dispersant pour la poudre dans le médium.

Le séchage par micro-ondes selon l'invention est avantageusement combiné avec un séchage infra-rouge ou de préférence avec un séchage par soufflage d'air chaud. Dans ces combinaisons, on conserve bien entendu l'avantage du séchage par micro-ondes, en particulier une longueur de ligne de séchage inférieure à celle d'une ligne toute I.R.

L'association particulièrement avantageuse d'un séchage par micro-ondes avec un séchage par soufflage d'air chaud peut être réalisée en alternant des séquences de séchage micro-ondes et de séchage par soufflage d'air chaud. Avantageusement, ces deux types de séchage sont combinés pour agir simultanément. Dans ce cas, l'efficacité du séchage est encore améliorée en utilisant des séquences de séchage combiné (action) - rien (non action des micro-ondes et du soufflage) - séchage combiné - rien, etc...

La température de l'air chaud est avantageusement assez peu élevée de façon à ne pas porter le substrat à une température également élevée. On utilise généralement une température d'air entre 30 et 90°C et de préférence entre 50 et 80°C.

Le temps de séchage peut selon l'invention être réduit jusqu'à plus de 50 % par rapport à un séchage tout I.R.. Ce gain en temps de séchage, à puissance énergétique utilisée équivalente, entre un séchage I.R. et un séchage selon l'invention dépend de la composition émaillée utilisée et en particulier du choix du dopant micro-ondes, et aussi de l'épaisseur de la couche émaillée formée.

Le procédé de séchage selon l'invention peut être mis en oeuvre à l'aide du dispositif décrit dans la publication de brevet européen 446 114 duquel l'homme de métier pourra tirer l'enseignement nécessaire, adapté au séchage de l'émail sur un substrat en verre. Lorsqu'on désire sécher la couche d'émail par une combinaison d'un séchage micro-ondes et d'un séchage par soufflage d'air chaud, on utilise de préférence une introduction des micro-ondes dans l'applicateur à cavité guide d'ondes parallélépipédique, latéralement par rapport à l'axe de dispositif, et perpendiculairement à l'introduction de l'air dans ledit applicateur, cet air chaud étant alors introduit perpendiculairement à la face de la couche émaillée à sécher. Le dispositif peut être équipé de plusieurs applicateurs disposés l'un après l'autre en pouvant être séparés par des intervalles plus ou moins grands, par exemple des intervalles de 10 à 30 cm.

D'autres avantages et caractéristiques de l'invention apparaitront dans les exemples suivants :

### EXEMPLE 1

On prépare une composition d'émail par mélange de 80 parties en poids d'une poudre du type contenant au moins une partie des composants principaux ci-après (1) et utilisée de façon courante dans l'industrie de l'émail pour substrat en verre, 12 parties en poids d'un médium à raison de 10 parties en poids d'une solution aqueuse à 33 % d'un mélange de polyéthylèneglycols et 2 parties en poids d'une solution aqueuse à 50 % de styrène-butadiène, 0,2 partie en poids d'un agent dispersant.
- (1): SiO₂
Al₂O₃
Fe₂O₃
MnO
MgO
CaO
B₂O₃
TiO₂
K₂O
Na₂O
PbO
CuO
CrO

Le nombre des parties de SiO₂ additionnées aux parties de Al₂O₃ étant dans cet exemple supérieur à 50 parties pour 100 parties au total.

La composition est appliquée par sérigraphie sur une feuille de verre de format éprouvette à température ambiante à 20°C environ afin de former une bande émaillée de 30 µm d'épaisseur à l'état humide. La feuille de verre passe à travers un four à micro-ondes multi-modes pour être soumise à une énergie micro-ondes de 350 W durant 45 secondes.

A la sortie du four, la bande émaillée est sèche. La température de la face du verre opposée à la couche est de 46°C.

### EXEMPLE TEMOIN 1

On opère comme dans l'exemple 1, sauf qu'on utilise un séchage IR de même puissance et durant 45 secondes. A la sortie du four, la bande émaillée n'est pas tout à fait sèche et la température mesurée pour la face du verre est de 52°C.

Cet exemple montre, comparé à l'exemple 1, que le séchage micro-ondes permet de réduire la durée de cette opération et qu'en outre il limite l'élévation de la température du substrat.

### EXEMPLE 2

On opère comme dans l'exemple 1, sauf qu'on introduit dans la composition émaillée un dopant micro-ondes, à savoir 15 parties en poids d'une dispersion à 50 % en poids de noir de carbone, les autres composants et les quantités étant inchangés, et on réduit la durée du séchage à 30 secondes. A la sortie du four, la bande émaillée est sèche et la température de la face du verre est de 47°C.

Par rapport à l'exemple 1, on observe une diminution du temps de séchage de l'émail contenant un dopant micro-ondes.

### EXEMPLE 3

On opère comme dans l'exemple 1, sauf qu'on introduit de la ferrite en tant que dopant dans la composition émaillée, à raison de 6 parties en poids, les autres composants et les quantités étant inchangées, et on réduit la durée de séchage à 40 secondes.

La ferrite utilisée est une ferrite de composition NiₓZn₁₋ₓFe₂O₄ avec 0,4 < x < 0,6, de structure spinelle.

Après cuisson, la bande émaillée est sèche et la température du verre est de 42°C.

### EXEMPLE 4

On opère comme dans l'exemple 1, sauf qu'on introduit un mélange de noir de carbone à raison de 10 parties en poids d'une dispersion à 50 %, et de ferrite à raison de 6 parties en poids, les autres composants et les quantités étant inchangées, et on réduit la durée de séchage à 30 secondes.

A la sortie du four, la bande émaillée est sèche. La température du verre est de 39°C.

Le mélange de noir de carbone et de ferrite réduit le risque de porosité de la couche émaillée par rapport à une couche ne contenant que du noir de carbone en tant que dopant micro-ondes.

### EXEMPLE 5

On opère comme dans l'exemple 4 sauf qu'on ajoute en outre 2 parties de micro-silice à surface hydrophobe. On observe une amélioration de la durée de vie de la composition d'émail avant son utilisation, la durée de vie passant d'environ 1 heure à plus de 2 heures, ainsi qu'une plus grande facilité d'application.

### EXEMPLES 6 ET 7

On opère comme dans l'exemple 4 et 5 sauf qu'on remplace le styrène-butadiène du médium par une dispersion d'un polymère d'un ester de l'acide méthacrylique.

Le séchage obtenu et la couche formée sont tout à fait satisfaisants.

### EXEMPLE 8

On utilise la composition de l'exemple 1 qu'on applique par sérigraphie-sur un vitrage automobile, à une température de 20°C environ afin de former une bande émaillée en forme de cadre de 30 µm d'épaisseur. Le vitrage passe dans un dispositif de séchage ou four associant l'action des micro-ondes à l'action d'un soufflage d'air chaud à 70°C. Ce dispositif comprend quatre applicateurs micro-ondes de 2000 watts chacun, ces applicateurs sont disposés à la suite les uns des autres en étant séparés chaque fois de 15 à 20 cm environ. Entre chaque applicateur, on soumet le vitrage à un soufflage d'air chaud. La durée de séchage est de 70 secondes.

Le vitrage est manipulable à la sortie du dispositif la couche d'émail étant sèche et la température du verre étant de l'ordre de 50°C.

### EXEMPLE 9

On opère comme dans l'exemple 8 sauf qu'on fait passer le vitrage dans un dispositif de séchage combinant l'action des micro-ondes et le soufflage d'air chaud à 70°C. Ce dispositif est équipé dans cet exemple de quatre applicateurs à cavité guide-d'ondes parallélélipédique, séparés les uns des autres d'environ 20 cm. Un conduit d'amenée d'air chaud par soufflage débouche dans la cavité guide d'ondes, au centre de chaque applicateur, au-dessus du vitrage qui se déplace dans la cavité. Les deux types de séchage s'effectuent en même temps et séquentiellement, c'est-à-dire par action des micro-ondes et de l'air chaud, puis rien, puis à nouveau action des micro-ondes et de l'air chaud, puis rien, et ainsi de suite, le nombre de séquences étant par exemple de quatre.

La durée totale de séchage est de 40 secondes seulement, la couche d'émail est parfaitement sèche, et son adhésion est très bonne (la couche d'émail accroche bien au verre et elle ne forme pas de croûte). A la sortie du dispositif de séchage, le vitrage est manipulable, la température du verre étant d'environ 50°C.

L'invention s'applique en particulier à la fabrication d'une couche d'émail en forme de bande, bordure, toutes autres formes, et de toutes tailles, telles que celles connues et utilisées dans les vitrages pour véhicule à moteur ou dans les vitrages pour le bâtiment ou encore sur des miroirs.

Un autre avantage de l'invention réside dans la possibilité de fabriquer une couche d'émail plus épaisse et plus homogène que lorsqu'on sèche par IR ou U.V. On peut fabriquer par exemple une couche d'épaisseur supérieure à 25 µm qui correspond généralement à l'épaisseur limite pour une couche séchée par IR ou UV dans des conditions industrielles. Selon l'invention, on peut fabriquer industriellement une couche pouvant avoir une épaisseur d'environ 35 µm sachant toutefois que 30 µm permet déjà d'obtenir, mieux que l'opacité généralement désirée pour une couche d'émail par exemple destinée à protéger un collage contre les UV.

## Revendications

1. Procédé pour la fabrication d'une couche d'émail sur au moins une partie d'un substrat en verre, en particulier un vitrage, dans lequel on dépose une composition d'émail sur le substrat pour former une couche, on sèche la couche formée, et ultérieurement on effectue la fusion de la couche émaillée, caractérisé en ce qu'au moins une partie du séchage est effectuée par micro-ondes, le séchage par micro-ondes étant associé à un séchage choisi parmi les séchages par I.R. et les séchages par soufflage d'air chaud.

2. Procédé selon la revendication 1, caractérisé en ce que le séchage micro-ondes est associé à un séchage par soufflage d'air chaud.

3. Procédé selon la revendication 2, caractérisé en ce que le séchage micro-ondes et le séchage par soufflage d'air chaud sont effectués simultanément.

4. Procédé selon la revendication 3, caractérisé en ce que le séchage par micro-ondes et le séchage par soufflage d'air chaud simultanés sont réalisés par séquences d'action de séchage et de non action.

5. Procédé selon l'une des revendications précédentes, caractérisé en ce qu'on utilise une composition d'émail contenant au moins un composant susceptible d'absorber de l'énergie micro-ondes.

6. Procédé selon la revendication 5, caractérisé en ce que la composition d'émail contient un médium aqueux.

7. Procédé selon l'une des revendications précédentes, caractérisé en ce que la composition d'émail comprend un dopant micro-ondes.

8. Composition d'émail utilisée pour la mise en oeuvre du procédé selon l'une des revendications précédentes, caractérisée en ce qu'elle comprend : une fritte à raison de 60 à 90 % en poids et au moins un dopant micro-ondes, à raison d'au moins 1 % en poids et de préférence d'au moins 3 % en poids de la composition d'émail.

9. Composition d'émail selon la revendication 8, caractérisée en ce que le dopant micro-ondes est choisi parmi les produits suivants : PbS, Fe₃O₄, CuO, NiO, MnO₂, Cr₂O₃, noir de carbone, des ferrites, du sulfure de cuivre, du carbure de silicium, un mélange de ces produits.

10. Composition d'émail selon une des revendications 8 ou 9, caractérisée en ce qu'elle comprend un médium aqueux, contenant notamment au moins un polyéthylèneglycol.

11. Composition d'émail selon la revendication 10, caractérisée en ce que le médium aqueux comprend un mélange de polyéthylèneglycols et de styrène-butadiène.

12. Composition d'émail selon une des revendications 8 à 11, caractérisée en ce qu'elle contient en outre au moins un additif retardant le séchage de la composition lors de l'application d'émail.

13. Composition d'émail selon la revendication 12, caractérisée en ce que l'additif est une micro-silice à surface hydrophobe.

14. Composition d'émail selon une des revendications 8 à 13, caractérisée en ce qu'elle comprend en outre un agent dispersant.

15. Dispositif pour la mise en oeuvre du procédé selon une des revendications 1 à 7, caractérisé en ce qu'il comprend au moins un applicateur micro-ondes associé à des moyens de soufflage d'air chaud.

16. Dispositif selon la revendication 15, caractérisé en ce qu'il comprend au moins un applicateur à cavité guide d'ondes parallélépipédique dans lequel débouche l'orifice de soufflage des moyens de soufflage d'air chaud.

17. Dispositif selon la revendication 16, caractérisé en ce qu'il comprend une succession d'applicateurs à cavité guide d'ondes parallélépipédique.

18. Application du procédé selon l'une des revendications 1 à 7 ou du dispositif selon l'une des revendication 15 à 17 à la fabrication de vitrages comprenant au moins une feuille de verre comportant au moins sur une partie de sa surface une couche d'émail.

19. Application selon la revendication 18, caractérisée en ce que la couche d'émail est homogène et a une épaisseur supérieure à 25 µm.

## Claims

1. Method of producing an enamel film on at least a part of a glass substrate, in particular a pane, in which an enamel composition is deposited on the substrate to form a film, the formed film is dried, and afterwards the fusion of the enamelled film is performed, characterized in that at least one part of the drying is performed by microwaves, the drying by microwaves being associated with a drying selected from among dryings by infrared radiation and dryings by hot air blowing.

2. Method according to claim 1, characterized in that the microwave drying is associated with a drying by hot air blowing.

3. Method according to claim 2, characterized in that the microwave drying and the drying by hot air blowing are performed simultaneously.

4. Method according to claim 3, characterized in that the simultaneous drying by microwaves and drying by hot air blowing are carried out by sequences of drying action and non-action.

5. Method according to one of the preceding claims, characterized in that an enamel composition is used containing at least one component capable of absorbing microwave energy.

6. Method according to claim 5, characterized in that the enamel composition contains an aqueous medium.

7. Method according to one of the preceding claims, characterized in that the enamel composition contains a microwave dopant.

8. Enamel composition used for carrying out the method according to one of the preceding claims, characterized in that it comprises: a frit in a proportion of 60 to 90% by weight and at least one microwave dopant, in a proportion of at least 1% by weight and preferably of at least 3% by weight of the enamel composition.

9. Enamel composition according to claim 8, characterized in that the microwave dopant is chosen from among the following products: PbS, Fe₃O₄, CuO, NiO, MnO₂, Cr₂O₃, carbon black, ferrites, copper sulphide, silicon carbide, a mixture of these products.

10. Enamel composition according to one of claims 8 or 9, characterized in that it comprises an aqueous medium containing, notably, at least one polyethylene glycol.

11. Enamel composition according to claim 10, characterized in that the aqueous medium comprises a mixture of polyethylene glycols and styrene-butadiene.

12. Enamel composition according to one of claims 8 to 11, characterized in that it contains, in addition, at least one additive retarding the drying of the composition during the application of the enamel.

13. Enamel composition according to claim 12, characterized in that the additive is a microsilica having a hydrophobic surface.

14. Enamel composition according to one of claims 8 to 13, characterized in that it comprises, in addition, a dispersing agent.

15. Device for carrying out the method according to one of claims 1 to 7, characterized in that it comprises at least one microwave applicator associated with means for hot air blowing.

16. Device according to claim 15, characterized in that it comprises at least one applicator having a parallelepipedic wave guide cavity, into which the blowing orifice of the hot air blowing means leads.

17. Device according to claim 16, characterized in that it comprises a succession of applicators having a parallelepipedic wave guide cavity.

18. Application of the method according to one of claims 1 to 7 or of the device according to one of claims 15 to 17 to the production of panes containing at least one glass sheet comprising, at least over a part of its surface, an enamel film.

19. Application according to claim 18, characterized in that the enamel film is homogeneous and has a thickness greater than 25 µm.

## Patentansprüche

1. Verfahren zur Herstellung einer Emailschicht auf wenigstens einem Teil eines Glassubstrates, insbesondere einer Verglasung, in welchem, um eine Schicht zu bilden, auf dem Substrat eine Emailzusammensetzung aufgebracht, die gebildete Schicht getrocknet und anschließend die Schicht aus der Emailzusammensetzung geschmolzen wird, **dadurch gekennzeichnet, daß** wenigstens ein Teil des Trocknungsvorgangs mittels Mikrowellen durchgeführt wird, wobei der Trocknungsvorgang mittels Mikrowellen mit einer Trocknung verbunden ist, die aus der Trocknung durch IR-Strahlung und der durch Einblasen von Heißluft ausgewählt ist.

2. Verfahren nach Anspruch 1, **dadurch gekennzeichnet, daß** der Trocknungsvorgang mittels Mikrowellen mit einer Trocknung durch Einblasen von Heißluft verbunden ist.

3. Verfahren nach Anspruch 2, **dadurch gekennzeichnet, daß** der Trocknungsvorgang mittels Mikrowellen und die Trocknung durch Einblasen von Heißluft gleichzeitig erfolgt.

4. Verfahren nach Anspruch 3, **dadurch gekennzeichnet, daß** die gleichzeitige Trocknung durch Mikrowellen und Einblasen von Heißluft durch eine unterbrochene Trocknungsfolge verwirklicht wird.

5. Verfahren nach einem der vorhergehenden Ansprüche, **dadurch gekennzeichnet, daß** eine Emailzusammensetzung verwendet wird, die wenigstens einen Bestandteil enthält, der die Energie der Mikrowellen aufnehmen kann.

6. Verfahren nach Anspruch 5, **dadurch gekennzeichnet, daß** die Emailzusammensetzung ein wäßriges Medium enthält.

7. Verfahren nach einem der vorhergehenden Ansprüche, **dadurch gekennzeichnet, daß** die Emailzusammensetzung einen Mikrowellen empfindlichen Zusatzstoff enthält.

8. Emailzusammensetzung, verwendet zur Durchführung des Verfahrens gemäß einem der vorhergehenden Ansprüche, **dadurch gekennzeichnet, daß** sie eine Fritte mit einem Anteil von 60 bis 90 Gew.-% und wenigstens einen Mikrowellen empfindlichen Zusatzstoff mit einem Anteil von mindestens 1 Gew.-% und vorzugsweise mindestens 3 Gew.-% der Emailzusammensetzung umfaßt.

9. Emailzusammensetzung nach Anspruch 8, **dadurch gekennzeichnet, daß** der Mikrowellen empfindliche Zusatzstoff aus den Stoffen PbS, Fe₃O₄, CuO, NiO, MnO₂, Cr₂O₃, Ruß, Ferrite, Kupfersulfid und Siliciumcarbid und einem Gemisch dieser Stoffe ausgewählt ist.

10. Emailzusammensetzung nach Anspruch 8 oder 9, **dadurch gekennzeichnet, daß** sie ein wäßriges Medium umfaßt, das insbesondere wenigstens ein Polyethylenglykol enthält.

11. Emailzusammensetzung nach Anspruch 10, **dadurch gekennzeichnet, daß** das wäßrige Medium ein Gemisch aus Polyethylenglykolen und Styrol-Butadien enthält.

12. Emailzusammensetzung nach einem der Ansprüche 8 bis 11, **dadurch gekennzeichnet, daß** sie außerdem wenigstens einen Zusatzstoff zum Verlangsamen der Trocknmung der Zusammensetzung während des Aufbringens des Emails enthält.

13. Emailzusammensetzung nach Anspruch 12, **dadurch gekennzeichnet, daß** der Zusatzstoff ein Mikrosiliciumdioxid mit hydrophober Oberfläche ist.

14. Emailzusammensetzung nach einem der Ansprüche 8 bis 13, **dadurch gekennzeichnet, daß** sie außerdem ein Dispergiermittel enthält.

15. Vorrichtung zur Durchführung des Verfahrens gemäß einem der Ansprüche 1 bis 7, **dadurch gekennzeichnet, daß** sie wenigstens einen Mikrowellenstrahler umfaßt, der mit Mitteln zum Einblasen von Heißluft verbunden ist.

16. Vorrichtung nach Anspruch 15, **dadurch gekennzeichnet, daß** sie wenigstens einen Strahler mit einem parallelepipedischen Hohlraum zur Führung der Mikrowellen umfaßt, in welchen die Blasöffnung der Mittel zum Einblasen von Heißluft mündet.

17. Vorrichtung nach Anspruch 16, **dadurch gekennzeichnet, daß** sie eine Aufeinanderfolge von Strahlern mit einem parallelepipedischen Hohlraum zur Führung der Mikrowellen umfaßt.

18. Anwendung des Verfahrens gemäß einem der Ansprüche 1 bis 7 oder der Vorrichtung gemäß einem der Ansprüche 15 bis 17 auf die Herstellung von Verglasungen, welche wenigstens eine Glasscheibe umfassen, die wenigstens auf einem Teil ihrer Oberfläche eine Emailschicht enthält.

19. Anwendung nach Anspruch 18, **dadurch gekennzeichnet, daß** die Emailschicht homogen ist und ihre Dicke mehr als 25 µm beträgt.
